# EUROPÄISCHE PATENTANMELDUNG

(11) **EP 2 243 649 A2**
(43) Veröffentlichungstag der Anmeldung: **27.10.2010**
(21) Anmeldenummer: 10003839.7
(22) Anmeldetag: 10.04.2010
(51) Int. Cl.: B60J 7/12, B60J 10/10

(54) **Faltdach für einen Personenkraftwagen**

(30) Priorität: 21.04.2009 DE 102009018295
(71) Anmelder: Magna Car Top Systems GmbH, 74321 Bietigheim-Bissingen (DE)
(72) Erfinder: Brod, Sabine, 74427 Fichtenberg (DE)

(57) **Zusammenfassung**

Dieses Faltdach ist für einen Personenkraftwagen konzipiert, welches Faltdach von einer einen Fahrgastraum überspannenden Schließstellung in eine in einem Heckraum abgelegte Offenstellung und vice versa verstellbar ist und an Längseiten Querschnittsprofile aufweisende Verdeckseitenträger eines einen Verdeckbezug tragenden Verdeckgestänges umfasst, welcher jeweilige Verdeckseitenträger eine Dichtkörpervorrichtung hält, die mit einer Seitenscheibe einer Tür und mit einer Innenseite des Verdeckbezugs zusammenarbeitet, wobei der Verdeckseitenträger mit einem Klammerabschnitt einen Halteabschnitt der Dichtkörpervorrichtung umgreift.

Um dieses Faltdach zu optimieren, ist der den Halteabschnitt eines ersten Dichtkörpers der Dichtkörpervorrichtung aufnehmende Klammerabschnitt als ein erster Profilabschnitt in den Verdeckseitenträger integriert. Dabei umgreift die Dichtkörpervorrichtung mit einem Dichtkörperabschnitt einen Profilhalteabschnitt des Verdeckseitenträges, und sie wird an diesem mittels eines ersten aufrechten Haltestegs festgelegt, welcher Dichtkörperabschnitt unter Vermittlung eines ersten Widerhakensystems in Lage gehalten wird.

## Beschreibung

Die Erfindung bezieht sich auf ein Faltdach für einen Personenkraftwagen, das von einer einen Fahrgastraum überspannenden Schließstellung in eine in einem Heckraum abgelegte Offenstellung und vice versa verstellbar ist, nach dem Oberbegriff des Patentanspruchs 1.

In der US 6,189,950 B1 wird eine Dichtungsstruktur für ein Faltdach eines Personenkraftwagens behandelt, das zwischen einer Schließstellung und einer Offenstellung bewegbar ist. Ein jeweils entlang einer Längsseite des Faltdachs verlaufender Lenker eines Verdeckgestänges trägt einen Dichtkörper. Der Dichtkörper stützt sich mittels Stützabschnitten an im Winkel zueinander verlaufenden Wänden des als Hohlkörper ausgebildeten Lenkers ab. An dem Dichtkörper sind ein oberer Dichtabschnitt und ein unterer Dichtabschnitt vorgesehen. Der obere Dichtabschnitt wirkt mit einer Innenseite einer Dachwand des Faltverdecks zusammen; der untere einerseits mit einer Türscheibe und andererseits mit einer der beiden Wände des Lenkers.

Die DE 43 39 896 A1 gibt ein Dichtungssystem zum Abdichten von Fahrzeugscheiben gegen ein Fahrzeugverdeck eines beweglichen Dachs wieder. Das Dichtungssystem weist pro Längsseite des Dachs ein Dachrahmenteil eines Verdeckgestänges auf. An dem Dachrahmenteil ist ein winkelförmiges Fensterführungsprofil angebracht, das mit an einer Türscheibe anliegenden Dichtlippen und einer seitlichen zu einer Innenseite des Faltverdecks hin abragenden Dichtlippe versehen ist. Das Fensterführungsprofil ist unter Vermittlung von Schrauben höhen-, längs- und seitenjustierbar mit dem Dachrahmenteil verbunden.

Gemäß der DE 94 20 205 U1 ist ein Faltverdeck eines Personenkraftwagens an jeder Längsseite mit einem Rahmenteil eines Verdeckgestänges ausgestattet. Das Rahmenteil ist mit einem Tragprofil über Schrauben verbunden, an welchem Tragprofil eine erste Dichtung mit einem unteren Dichtbereich angeformt ist. Der unter Dichtbereich arbeitet mit einer ersten Lippe mit der Türscheibe und einer zweiten Lippe mit einem Rahmenteil zusammen. An einem Steg des Rahmenteils ist eine zweite Dichtung mit einem oberen Dichtbereich angebracht, welche zweite Dichtung unter Zwischenschaltung einer Dichtlippe und eines Schlauchabschnitts auf eine innere Wand des Faltverdecks einwirkt. Zwischen Rändern des Faltverdecks und der Türscheibe ist ein Tragsteg für eine Regenrinne hindurchgeführt, die Bestandteil des Tragprofils sind.

Aufgabe der Erfindung ist es, eine Dichtkörpervorrichtung für ein Faltdach eines Personenkraftwagens zwischen einem Verdeckseitenträger und einer Seitenscheibe einer Tür sowie einer Innenseite eines Verdeckbezugs des Faltdachs so zu gestalten, dass die Dichtkörpervorrichtung bei gezielter Dichtfunktion sich durch leichte Montage und sichere Halterung an dem Verdeckseitenträger auszeichnet.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass der Verdeckseitenträger des Faltdachs mittels eines ersten Dichtkörpers und eines zweiten Dichtkörpers funktionsgerecht einerseits mit der Seitenscheibe und andererseits mit der Innenseite des Verdeckbezugs des Faltdachs zusammenwirkt. Dabei tragen die Aufnahmen und Haltestege des z.B. aus einem Leichtmetall-Strangpressprofil bestehenden Verdeckseitenträgers in Verbindung mit entsprechenden Ausbildungen der beiden Dichtkörper zum einen zur aufwandsarmen Montage und zum anderen zur vorbildlichen Halterung der besagten Dichtkörper bei. Dies wird durch die Widerhakensysteme und die Haltestege sowie Ausnehmungen des Verdeckseitenträgers bzw. der Dichtkörper unterstützt. Der erste Dichtkörper übt dank des lippenartigen Abdeckelements und der schlauchartigen Dichtelemente mehrere Funktionen aus. Schließlich ist der zweite Dichtkörper mit seinen beiden sich am Verdeckbezug abstützenden Lippen besonders wirksam. In der Zeichnung wird ein Ausführungsbeispiel der Erfindung gezeigt, das nachstehend näher erläutert wird.

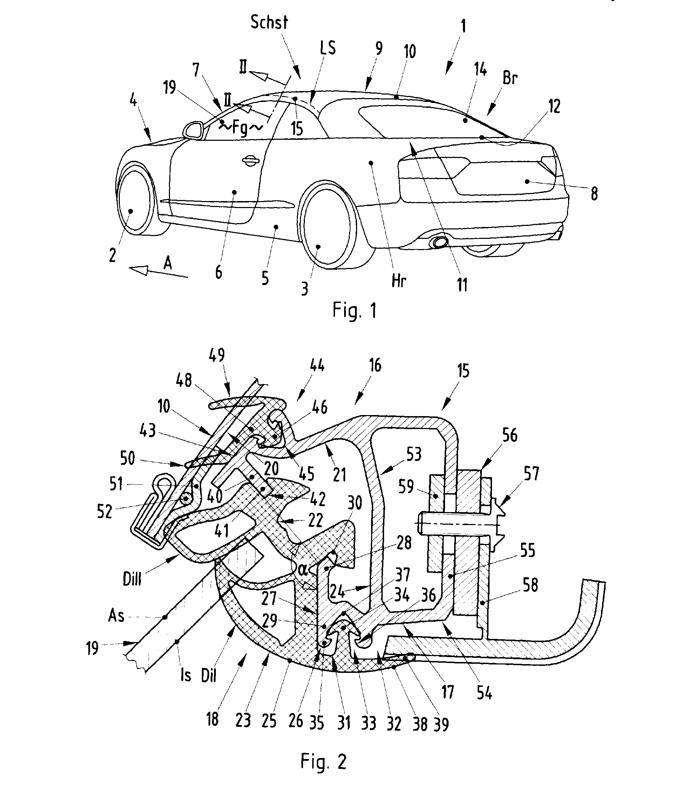

Es zeigen
- Fig. 1: eine Schrägansicht von hinten links auf einen Personenkraftwagen mit einem Faltdach,
- Fig. 2: einen Schnitt nach der etwa entlang einer Mittellängsebene verlaufenden Linie II-II der Fig. 1 in größerem Maßstab.

Ein Personenkraftwagen 1 weist einen von Rädern 2 und 3 getragenen Aufbau 4 auf, der einen Grundkörper 5 mit Türen 6, einem Windschutzscheibenrahmen 7 und eine Heckklappe 8 besitzt. Am Aufbau 4 bzw. Grundkörper 5 ist ein Faltdach 9 gelagert, das zwischen einer einen Fahrgastraum Fg überspannenden Schließstellung Schst und einer in einem Heckraum Hr ablegbaren Offenstellung -nicht gezeigt- bewegbar ist. Das Faltdach 9 umfasst einen flexiblen Verdeckbezug 10, der sich in der Schließstellung vom Windschutzscheibenrahmen 7 bis zu einem hinteren Abschnitt 11 einer Gürtellinie 12 erstreckt. In den Verdeckbezug 10, der zumindest bereichsweise auf einer dem Fahrgastraum Fg zugewandten Seite mit einer Innenverkleidung 13 versehen ist, ist in einem rückwärtigen Bereich Br eine Heckscheibe 14 integriert. Die Heckscheibe 14 besteht bspw. aus Glas und verläuft entgegen Fahrtrichtung A betrachtet schräg von oben nach unten.

Der Verdeckbezug 10 wird von einem Verdeckgestänge 15 getragen, das an Längsseiten des Faltdachs 9 Querschnittsprofile 16 aufweisende Verdeckseitenträger 17 besitzt. Jeder Verdeckseitenträger 17 trägt eine Dichtkörpervorrichtung 18, die mit einer höhenbeweglichen Seitenscheibe 19 der Tür 6 und einer Innenseite 20 des Verdeckbezugs 10 dichtend zusammenarbeitet. Der bspw. als Leichtmetall-Strangpressprofil ausgebildete Verdeckseitenträger 17 umgreift mit einem Klammerabschnitt 21 einen ersten Halteabschnitt 22 der Dichtkörpervorrichtung 18.

Der erste Halteabschnitt 22 ist Bestandteil eines ersten Dichtkörpers 23 der Dichtkörpervorrichtung 18, und der Klammerabschnitt 21 ist als ein erster Profilabschnitt 24 in den Verdeckseitenträger 17 integriert. Der erste Dichtkörper 23 der Dichtkörpervorrichtung 18 ist mittels eines Dichtkörperabschnitts 25 um einen Profilhalteabschnitt 26 herumgeführt, und der Dichtkörperabschnitt 25 ist an einem ersten aufrechten Haltesteg 27 festgelegt, dergestalt, dass er mit freien Enden 28 und 29 in korrespondierende erste und zweite Ausnehmungen 30 bzw. 31 eingreift. Dieser Dichtkörperabschnitt 25 wird an einer Außenseite 32 des Verdeckseitenträgers 17 unter Vermittlung eines ersten Widerhakensystems 33 in Lage gehalten. In den ersten Dichtkörper 23 integriert sind auf einem der Seitenscheibe 19 zugekehrten Bereich ein erstes schlauchartiges Dichtelement Dil und ein zweites schlauchartiges Dichtelement Dill, die an der Außenseite As bzw. der Innenseite Is der Seitenscheibe 19 anliegen.

Das erste Widerhakensystem 33 weist ein ankerförmiges Eingriffselement 34 des Dichtkörperabschnitts 25 auf, das in eine erste mit Widerhaken 35 und 36 versehene Aufnahme 37 des Profilabschnitts eingerückt ist. An den Dichtkörperabschnitt 25 angeformt ist ein lippenartiges Abdeckelement 38, das sich etwa horizontal quer zur Fahrtrichtung A erstreckt und einen Rand 39 einer Innenverkleidung 13 -Innenhimmel- übergreift.

Der Klammerabschnitt 21 des ersten Profilabschnitts 24 ist mit einem zweiten Haltesteg 40 versehen, der mit dem ersten Halteabschnitt 22 des ersten Dichtkörpers 23 in der Weise zusammenarbeitet, dass ein freies Ende 41 des besagten zweiten Haltestegs 40 in eine dritte Ausnehmung 42 des ersten Halteabschnitts 22 eingreift. Der erste Haltesteg 27 und der zweite Haltesteg 40 sind einander zugekehrt und sie schließen einen stumpfen Winkel α ein.

Auf einem vom zweiten Haltesteg 40 abgekehrten Wandabschnitt 43 des Klammerabschnitts 21 ist ein zweiter Dichtkörper 44 der Dichtkörpervorrichtung 18 vorgesehen. Der zweite Dichtkörper 44 ist zwischen Innenseite 20 des Verdeckbezugs 10 und dem Wandabschnitt 43 wirksam und wird unter Vermittlung eines zweiten Widerhakensystems 45, umfassend ein ankerartiges Engriffselement 46 des zweiten Dichtkörpers 41 und eine korrespondierende Ausnehmung 47 des Klammerabschnitts 21, gehalten. Auf der dem Verdeckbezug 10 zugekehrten Seite sind an einem Basisteil 48 des zweiten Dichtkörpers 44 zwei Dichtlippen 49 und 50 angeformt, die an besagtem Verdeckbezug 10 dichtend anliegen. Unterhalb des zweiten Dichtkörpers 44 ist am Verdeckbezug 10 eine Haltetasche 51 für ein Spannseil 52 angebracht.

Auf einer dem ersten Profilabschnitt 24 abgekehrten Seite ist am Verdeckseitenträger 17 ein zweiter Profilabschnitt 53 ausgebildet, der ungefähr einen C-förmigen Querschnitt 54 besitzt. Dabei ist eine äußere aufrechte Wand 55 des C-förmigen Querschnitts 54 zur Halterung eines Lenkers 56 des Verdeckgestänges 15 ausgebildet. Schließlich wird ein zur Halterung des Lenkers 56 am Verdeckseitenträger 17 dienender Schraubenbolzen 57 zur Befestigung einer Haltekonsole 58 der Innenverkleidung 13 herangezogen. Dieser Schraubenbolzen 57 ist in eine Gewindeplatte 59 des C-förmigen Querschnitts 54 hineingedreht.

## Patentansprüche

1. Faltdach für einen Personenkraftwagen, das von einer einen Fahrgastraum überspannenden Schließstellung in eine in einem Heckraum abgelegte Offenstellung und vice versa verstellbar ist und an Längseiten Querschnittsprofile aufweisende Verdeckseitenträger eines einen Verdeckbezug tragenden Verdeckgestänges umfasst, welcher jeweilige Verdeckseitenträger eine Dichtkörpervorrichtung hält, die mit einer Seitenscheibe einer Tür und mit einer Innenseite des Verdeckbezugs zusammenarbeitet, wobei der Verdeckseitenträger mit einem Klammerabschnitt einen Halteabschnitt der Dichtkörpervorrichtung umgreift, **dadurch gekennzeichnet, dass** der den Halteabschnitt (22) eines ersten Dichtkörpers (23) der Dichtkörpervorrichtung (18) aufnehmende Klammerabschnitt (21) als ein erster Profilabschnitt (24) in den Verdeckseitenträger (17) integriert ist und die Dichtkörpervorrichtung (18) mit einem Dichtkörperabschnitt (25) einen Profilhalteabschnitt (26) des Verdeckseitenträgers (17) umgreift sowie an diesem mittels eines ersten aufrechten Haltestegs (27) festgelegt wird, welcher Dichtkörperabschnitt (25) unter Vermittlung eines ersten Widerhakensystems (33) in Lage gehalten wird.

2. Faltverdeck nach Anspruch 1, **dadurch gekennzeichnet, dass** das erste Widerhakensystem (33) ein ankerförmiges Eingriffselement (34) des Dichtkörperabschnitts (25) aufweist, das in eine erste Aufnahme (37) des ersten Profilabschnitts (24) eingreift.

3. Faltverdeck nach Anspruch 1, **dadurch gekennzeichnet, dass** der erste Haltesteg (27) des Profilhalteabschnitts (26) mit freien Enden (28 und 29) in Ausnehmungen (30 und 31) des Halteabschnitts (26) eingreift.

4. Faltverdeck nach Anspruch 1, **dadurch gekennzeichnet, dass** der Dichtkörperabschnitt (25) mit einem lippenartigen etwa horizontal ausgerichteten Abdeckelement (38) einen Rand (39) einer Innenverkleidung (13) übergreift.

5. Faltverdeck nach einem oder mehreren der vorangehenden Ansprüche, **dadurch gekennzeichnet, dass** der Klammerabschnitt (21) des ersten Profilabschnitts (24) mit einem zweiten Haltesteg (40) mit dem Halteabschnitt (22) des ersten Dichtkörpers (23) zusammenarbeitet.

6. Faltverdeck nach Anspruch 5, **dadurch gekennzeichnet, dass** der zweite Haltesteg (40) mit einem freien Ende (41) in eine dritte Ausnehmung (42) des Haltabschnitts (22) des ersten Dichtkörpers (23) eingreift.

7. Faltverdeck nach einem oder mehreren der vorangehenden Ansprüche, **dadurch gekennzeichnet, dass** der erste Haltesteg (27) und der zweite Haltesteg (40) einander zugekehrt sind.

8. Faltverdeck nach einem oder mehreren der vorangehenden Ansprüche, **dadurch gekennzeichnet, dass** auf einem vom zweiten Haltesteg (40) abgekehrten Wandabschnitt (43) des Klammerabschnitts (21) ein zweiter Dichtkörper (44) der Dichtkörpervorrichtung (18) vorgesehen ist, welcher zweite Dichtkörper (44) zwischen einer Innenseite (20) des Verdeckbezugs (10) und dem Wandabschnitt (43) wirksam ist.

9. Faltverdeck nach Anspruch 8, **dadurch gekennzeichnet, dass** der zweite Dichtkörper (44) mittels eines zweiten Widerhakensystems (45) am Klammerabschnitt (21) in Lage gehalten wird.

10. Faltverdeck nach Anspruch 9, **dadurch gekennzeichnet, dass** das zweite Widerhakensystem (45) mit einem ankerartigen Eingriffselement (46) mit einer Ausnehmung (47) des Klammerabschnitts (21) zusammenarbeitet.

11. Faltverdeck nach Anspruch 8, **dadurch gekennzeichnet, dass** der zweite Dichtkörper (44) auf der dem Verdeckbezug (10) zugewandten Seite wenigsten eine sich an besagtem Verdeckbezug (10) abstützende Dichtlippe (49 oder 50) aufweist.

12. Faltverdeck nach den Ansprüchen 1, 8 und 9, **dadurch gekennzeichnet, dass** unterhalb des zweiten Dichtkörpers (44) am Verdeckbezug (10) eine Haltelasche (51) für ein Spannseil (52) angebracht ist.

13. Faltverdeck nach einem oder mehreren der vorangehenden Ansprüche, **dadurch gekennzeichnet, dass** der erste Dichtkörper (23) auf einem der Seitenscheibe (19) zugekehrten Bereich ein erstes schlauchartiges Dichtelement (Dil) und ein zweites schlauchartiges Dichtelement (Dill) aufweist.

14. Faltverdeck nach Anspruch 1, **dadurch gekennzeichnet, dass** auf einer vom ersten Profilabschnitt (24)) abgekehrten Seite des Verdeckseitenträgers (17) ein zweiter Profilabschnitt (53) ausgebildet ist, der in etwa einen C-förmigen Querschnitt (54) besitzt.

15. Faltverdeck nach Anspruch 14, **dadurch gekennzeichnet, dass** eine äußere aufrechte Wand (55) des C-förmigen Querschnitts (54) zur Halterung eines Lenkers (56) des Verdeckgestänges (15) ausgebildet ist.

16. Faltverdeck nach einem oder mehreren der vorangehenden Ansprüche, **dadurch gekennzeichnet, dass** ein zur Halterung des Lenkers (56) dienender Schraubenbolzen (57) zur Befestigung einer Haltekonsole (58) der Innenverkleidung (13) herangezogen wird.
